# EUROPÄISCHE PATENTANMELDUNG

(11) **EP 1 518 845 A1**
(43) Veröffentlichungstag der Anmeldung: **30.03.2005**
(21) Anmeldenummer: 04020938.9
(22) Anmeldetag: 03.09.2004
(51) Int. Cl.: C04B 41/50

(54) **Suspension für die Herstellung eines korrosionsfesten Überzugs auf einem keramischen Gegenstand und Verfahren zur Herstellung des Überzugs**

(30) Priorität: 17.09.2003 DE 10342905
(71) Anmelder: Forschungszentrum Karlsruhe GmbH, 76133 Karlsruhe (DE)
(72) Erfinder: Kaufmann, Ulrike, Dr., 76133 Karlsruhe (DE); Stolz, Stefan, 95679 Waldershof (DE); Winter, Volker, Dr., 76149 Karlsruhe (DE); Ritzhaupt-Kleissl, Hans-Joachim, Dr., 69190 Walldorf (DE)

(57) **Zusammenfassung**

Der Erfindung liegt die Aufgabe zugrunde, für keramische Gegenstände einen korrosions- und hochtemperaturbeständigen Überzug vorzuschlagen. Die Aufgabe wird gelöst durch eine Suspension bestehend aus:
- einem Pulver aus mindestens einer Keramik,
- einem Dispergiermittel,
- einem organischen Lösungsmittel,
- einem Celluloseether.
Mit der Suspension werden die keramischen Gegenstände behandelt, wonach sich eine Sinterung anschließt, durch die der gewünschte hochtemperaturbeständige Überzug entsteht.

## Beschreibung

Die Erfindung betrifft eine Suspension für die Herstellung eines korrosionsfesten Überzugs auf einem Gegenstand aus einer Keramik gemäß Anspruch 1 und ein Verfahren zur Herstellung des Überzugs gemäß Anspruch 6.

Die Verwendung von Keramik als Werkstoff stößt auf Probleme, wenn die daraus gefertigten Gegenstände einem korrosiven Angriff durch Chemikalien wie Laugen und Säuren oder aggressiven Atmosphären oder aber einer sehr hohen Temperatur (über 1000°C) in Luft ausgesetzt sind. Dies gilt insbesondere für nichtoxidische Keramiken wie Carbide, Nitride, Silicide oder Boride; es gibt jedoch auch Oxidkeramiken, die gegen solche Angriffe wenig beständig sind.

In vielen Fällen wäre es jedoch von Vorteil, wenn die Keramik mit einem schützenden Überzug versehen werden könnte, der korrosive Angriffe, insbesondere bei hoher Temperatur in sauerstoffhaltiger Atmosphäre, verhindert. Aus der DE 296 23 184 U ist ein heizbares keramisches Element bekannt, das durch Stromwiderstandsheizung auf eine hohe Temperatur gebracht wird. Bei Anwendung für höhere Temperaturen muss das Heizelement vor Oxidation geschützt werden.

Schutzschichten oder korrosionshemmende Überzüge sind in vielen technischen Bereichen, insbesondere für Gegenstände aus Metallen, seit langem Stand der Technik. Die besonderen Eigenschaften von Keramik, insbesondere die Wärmedehnung und das Bruchverhalten bewirken jedoch, dass die bekannten Schutzschichten für Metalle bei Keramiken nicht verwendbar sind.

Der Erfindung liegt die Aufgabe zugrunde, eine Zusammensetzung vorzuschlagen, mit deren Hilfe ein korrosionshemmender Überzug auf keramischen Gegenständen hergestellt werden kann, der gut auf der Keramik haftet und bei Temperaturbeanspruchung, insbesondere unter oxidierender Atmosphäre, oder einem chemischen Angriff nicht abplatzt. Außerdem soll ein Verfahren vorgeschlagen werden, mit dessen Hilfe ein solcher Überzug auf einem keramischen Gegenstand erzeugt werden kann.

Die Aufgabe wird durch die Suspension gemäß Anspruch 1 und das Verfahren gemäß Anspruch 6 gelöst. Die weiteren Ansprüche beschreiben bevorzugte Ausgestaltungen der Suspension und des Verfahrens.

In Anspruch 1 ist eine Suspension beschrieben, mit deren Hilfe auf keramischen Gegenständen ein korrosionsfester und hitzebeständiger Überzug erzeugt werden kann. Die Suspension kann durch bekannte Verfahren, insbesondere durch Tauchen oder Spritzen, auf den keramischen Gegenständen aufgebracht werden; sie wird anschließend einer Wärmebehandlung unterzogen. Die Dicke der Suspensionsschicht und damit die Dicke des späteren Überzugs lässt sich einstellen, indem gegebenenfalls der Tauch- oder Spritzvorgang ein oder mehrmals wiederholt wird. Wie im Folgenden beschrieben wird, können auch die Viskosität und damit die rheologischen Eigenschaften der Suspension eingestellt werden, so dass sich auch auf diese Weise die Schichtdicke des Überzugs nach Wunsch variieren lässt.

Die Suspension enthält als wichtigste Komponente ein Pulver aus mindestens einer Keramik. Das Pulver kann aus Zirkondioxid, Aluminiumoxid oder Siliciumnitrid bestehen. Bevorzugt werden jedoch die Kombinationen dieser Keramiken eingesetzt, weil damit der Temperaturkoeffizient des späteren Überzugs auf einfache Weise an den Temperaturkoeffizienten des zu beschichtenden keramischen Gegenstandes angepasst werden kann. Enthält das Pulver Siliciumnitrid, empfiehlt es sich, Yttriumoxid und/oder Magnesiumoxid als Sinterhilfsmittel zuzugeben.

Die Suspension enthält weiterhin mindestens ein Dispergiermittel. Als Dispergiermittel eignen sich Ether und Polymere wie z. B. Brij72 (Diethylenglycoloctadecylether), Brij30 (Tetraethylenglycoldodecylether), Triethanolamin (N(Ch₂-CH₂-OH)₃), Glycerintrioleat (C₅₇H₁₀₄O₆), Hypermer KD-1, (Hersteller: ICI; Poly-ester/Polyamin-Copolymer) und Perfad 9100, (Hersteller: ICI; polymerisierte Fettsäuren [Amin]).

Als weitere Komponente enthält die Suspension Celluloseether. Geeignet sind insbesondere Methyl- und Ethylcellulose.

Schließlich enthält die Suspension ein organisches Lösungsmittel, vorzugsweise Terpineol, Diethylenglycolmonobutyletheracetat oder Ethylenglycol oder deren Mischungen. Da die am besten geeigneten Lösungsmittel, insbesondere die genannten, sehr viskos sind, braucht man meist ein Verdünnungsmittel, in dem sich das viskose organische Lösungsmittel seinerseits löst, so dass die Suspension verarbeitbar bleibt. Eine zu viskose Suspension lässt sich durch Tauchen oder Spritzen nicht mehr gleichmäßig auf dem keramischen Gegenstand auftragen. Als Verdünnungsmittel sind alle Lösungsmittel geeignet, in denen sich das organische Lösungsmittel unzersetzt lösen lässt und deren Viskosität geringer ist als die Viskosität des organischen Lösungsmittels. Bevorzugt werden höherwertige Alkohole mit mindestens 3 Kohlenstoffatomen als Verdünnungsmittel eingesetzt. Gut geeignet ist Isopropanol.

Die Menge des Pulvers der Keramik soll etwa 25 bis 60 Gew.-%, vorzugsweise 35 bis 50 Gew.-% betragen. Die Konzentration der organischen Bestandteile der Suspension lassen sich in weiten Grenzen variieren. Generell soll die Suspension so zusammengesetzt sein, dass ihre Dichte 1,5 bis 2,5 g/cm³, vorzugsweise 1,8 bis 2,1 g/cm³ beträgt. Die Menge an Verdünnungsmittel bestimmt in den meisten Fällen die rheologischen Eigenschaften, die für den Auftrag der Suspension auf den keramischen Gegenstand wichtig sind. Die rheologischen Eigenschaften können für jeden Anwendungszweck eingestellt werden. Für dicke Überzüge, die im Tauchverfahren hergestellt werden, eignen sich verhältnismäßig viskose Suspensionen besser, während dünne Überzüge, die durch Spritzen erzeugt werden sollen, mit niederviskosen Suspensionen leichter herstellbar sind.

Die Suspension muss nach der Beschichtung des keramischen Gegenstandes einer Wärmebehandlung unterzogen werden, damit der gewünschte korrosions- und wärmefeste Überzug entsteht.

Der keramische Gegenstand, der mit dem Überzug versehen werden soll, kann im Wesentlichen aus jeder beliebigen Keramik bestehen. Wie erwähnt, lässt sich durch Veränderung der chemischen Zusammensetzung des Keramikpulvers in der Suspension der Temperaturkoeffizient sehr genau an den Temperaturkoeffizienten des keramischen Gegenstandes anpassen, so dass beim Aufheizen oder Abkühlen keine Spannungsrisse auftreten. Besondere Vorteile ergeben sich, wenn keramische Gegenstände auf der Basis von TiN/Al₂O₃ oder aus TiN/Si₃N₄, die als keramische Heiz- oder Zündkomponenten Anwendung finden sollen, mit dem schützenden Überzug versehen werden, weil diese Keramiken beim Erhitzen in Luft leicht zerstört werden.

Generell kann der Überzug auf dem keramischen Gegenstand durch die Abfolge der nachstehend aufgeführten Verfahrensschritte hergestellt werden:

Zuerst wird das organische Lösungsmittel und das Dispergiermittel homogen miteinander gemischt, so dass sich das Dispergiermittel vollständig im organischen Lösungsmittel aufgelöst. Danach wird das getrocknete Pulver der Keramik oder ein gemischtes Pulver aus mehreren Keramiken homogen in die Lösung aus dem organischen Lösungsmittel und dem Dispergiermittel eingearbeitet. Anschließend wird der Celluloseether eingerührt und die entstehende Mischung homogenisiert. Das gewünschte Fließverhalten wird nun durch Zugabe des Verdünnungsmittels eingestellt. Nach diesem Schritt ist die Suspension gebrauchsfertig.

Der keramische Gegenstand wird nun mit der Suspension überzogen, wobei sich im Grundsatz alle Verfahren eignen, mit denen ein Überzug hergestellt werden kann. Gut geeignet sind wie bereits erwähnt Tauchen und Spritzen. Die Dicke der Suspension auf dem keramischen Gegenstand lässt sich durch Variation der rheologischen Eigenschaften und durch Wiederholen des Beschichtungsvorgangs, beispielsweise durch mehrfaches Tauchen, nach Wunsch einstellen. Gute Ergebnisse erzielt man, wenn die Dicke der Suspension auf dem keramischen Gegenstand nach dem folgenden Trocknungsschritt zwischen 30 und 80 µm beträgt.

Anschließend wird der mit dem Überzug aus der Suspension versehene keramische Gegenstand getrocknet. Die Trocknung kann bei Raumtemperatur, aber auch bei leicht erhöhter Temperatur im Trockenschrank, beispielsweise bei 30°C bis 100°C, vorgenommen werden. Gut geeignet ist eine Trocknungstemperatur von 80°C bei einer Trocknungszeit von 20 bis 45 Minuten. Die Trocknung ist beendet, wenn das Verdünnungsmittel verdunstet ist, was bei 80°C erfahrungsgemäß ca. 25 Minuten dauert. Schließlich wird der keramische Gegenstand mit dem getrockneten Überzug gesintert. Die Sintertemperatur soll 1400°C bis 1900°C betragen. Gute Ergebnisse werden mit Sintertemperaturen von 1700°C bis 1875°C erzielt. Die Sinterung dient sowohl dem Keramisieren und Einbrennen der Suspension als auch zum Abbau unzulässig hoher thermischer Spannungen bei einem späteren Aufheizen.

Der auf diese Weise erzeugte Überzug erweist sich auch bei hohen Temperaturen in Luft als sehr oxidationsbeständig. Er bildet teilweise glasartige, dichte Schichten aus, die die gewünschten Eigenschaften hervorrufen.

Die Erfindung wird im Folgenden anhand von Ausführungsbeispielen näher erläutert.

### Beispiel:

Zwei Glühstifte aus TiN/Al₂O₃ und aus TiN/Si₃N₄ sollen mit einem hochtemperaturfesten Überzug versehen werden. Der Überzug besteht im ersten Fall aus Aluminiumoxid, im zweiten Fall aus Siliciumnitrid.

Die Zusammensetzungen der beiden Suspensionen, mit denen die Glühstifte beschichtet werden sollen, sind in der folgenden Tabelle dargestellt:

| Mischung Nummer | Si₃N₄ incl. Sinterhilfen | Al₂O₃ | Dispergiermittel | Terpineol | Si₃N₄ | Al₂O₃ | 10 % EC^{*)} |
|---|---|---|---|---|---|---|---|
| | Massenanteil in [%] | | in [g] | in [g] | in [g] | in [g] | in [g] |
| 1 | 0 | 100 | 0,4 | 9,6 | 0 | 50...55 | 2,5 |
| 2 | 100 | 0 | 0,4 | 9,6 | 30...35 | 0 | 2,5 |

| | | | | | | | |
|---|---|---|---|---|---|---|---|
| ^{*)} EC: Ethylcellulose | | | | | | | |

Entsprechend der Rezeptur in der Tabelle wurden Terpineol und Dispergiermittel mit einem Magnetrührer bei einer Umdrehungszahl von 200 bis 300 U/min. 30 min. lang in einem auf 40°C temperierten Wasserbad vorgemischt, bis das Dispergiermittel vollständig gelöst war. Der jeweilige Keramikanteil (Aluminiumoxid oder Siliciumnitrid) wurde als Pulver 1 Stunde lang im Trockenschrank bei 120°C getrocknet und unter Rühren mit dem Spatel in kleiner werdenden Mengen hinzugefügt, wobei nach dem Einrühren der Teilmenge mit dem Spatel 30 s lang mit dem Ultraschallfinger dispergiert wurde. Der Mischung wurde dann 2,5 g einer Lösung bestehend aus Terpineol und Ethylcellulose unter intensivem Rühren mit dem Spatel zugeführt. Anschließend wird die Masse noch 3 Mal über einen Walzenstuhl gegeben.

Die Masse wird bis zur Einstellung des gewünschten Fließverhaltens oder direkt im Verhältnis 10:3 mit Isopropanol verdünnt und unter ständigem Rühren mit einem Rührfisch homogenisiert. Die Dichte lag im Bereich zwischen 1,8 und 2,1 g/cm³.

Die Glühstifte wurden nun mehrfach in die Suspension eingetaucht. Die Suspension ist wegen des leichtflüchtigen Lösungsmittelgehaltes schnell trocknend. Sie erzeugte auf den Glühstiften einen gummiartigen, allseits festsitzenden und auch kantenbenetzenden Überzug. Nach jedem Tauchvorgang wurde die Suspension 20 min. lang bei 80°C auf den Glühstiften getrocknet, bis die Schicht ca. 50 µm dick war.

Schließlich wurden die beschichteten Glühstifte einer Hochtemperaturbehandlung bei einer Temperatur von 1750 bzw. 1900°C unterzogen. Die Dauer der Sinterbehandlung betrug 2 bzw. 0,5 Stunden. Anschließend wurden die mit dem Überzug versehenen Glühstifte auf Raumtemperatur abgekühlt.

Die auf diese Weise mit dem Überzug versehenen Glühstift zeigten sich als sehr korrosionsbeständig, und zwar auch bei Spitzentemperaturen von 1200°C, die 120 Stunden lang aufrechterhalten wurden. Glühzylinder, die einem zyklischen Test unterzogen wurden, hielten diesem 80000 Zyklen bis 1150°C bei Zykluszeiten von 3 Minuten Stand. Eine Verschlechterung des Überzugs bei mehreren Heizzyklen, insbesondere ein Abplatzen des Überzugs, war nicht festzustellen.

## Patentansprüche

1. Suspension für die Herstellung eines korrosionsfesten Überzugs auf einem keramischen Gegenstand bestehend aus:
- einem Pulver aus mindestens einer Keramik,
- einem Dispergiermittel,
- einem organischen Lösungsmittel
- einem Celluloseether.

2. Suspension nach Anspruch 1 mit Diethylenglycolmonobutylether-acetat, Ethylenglycol und/oder Terpineol als organisches Lösungsmittel.

3. Suspension nach Anspruch 1 oder 2 mit einem Pulver aus Aluminiumoxid, Zirkondioxid oder Siliciumnitrid oder deren Kombinationen.

4. Suspension nach Anspruch 1 mit einem Celluloseether bestehend aus Methyl- und/oder Ethylcellulose.

5. Suspension nach Anspruch 1 oder 2 mit einem mindestens 3 Kohlenstoff-Atome aufweisenden Alkohol als Verdünnungsmittel für das organische Lösungsmittel.

6. Suspension nach einem der Ansprüche 1 bis 5 mit einem Gehalt von 25 bis 60 Gew.-% des Pulvers, wobei die Dichte der Suspension 1,5 bis 2,5 g/cm³ beträgt und durch Wahl der Konzentration des Dispergiermittels, des organischen Lösungsmittels, des Celluloseethers und ggf. des Verdünnungsmittel die gewünschten rheologischen Eigenschaften eingestellt werden.

7. Verfahren zur Herstellung eines korrosionsfesten Überzugs auf einem keramischen Gegenstand mit den Schritten:
- Erzeugung einer homogenen Mischung eines organischen Lösungsmittels und eines Dispergiermittels,
- Zugabe und homogene Verteilung eines getrockneten Pulvers aus einer Keramik,
- Zugabe eines Celluloseethers und homogene Verteilung des Celluloseethers,
- Einstellung eines gewünschten Fließverhaltens ggf. durch Zugabe und homogene Verteilung eines Verdünnungsmittels für das organische Lösungsmittel,
- Aufbringen der Suspension als Überzug auf dem keramischen Gegenstand,
- Trocknen des Überzugs auf dem keramischen Gegenstand,
- Sintern des Überzugs bei einer Temperatur von 1400°C bis 1900°C.

8. Verfahren nach Anspruch 6, bei dem das Sintern des Überzugs bei einer Temperatur von 1700°C bis 1875°C vorgenommen wird.
